# EUROPEAN PATENT APPLICATION

(11) **EP 4 521 248 A1**
(43) Date of publication of application: **12.03.2025**
(21) Application number: 23823242.5
(22) Date of filing: 16.06.2023
(51) Int. Cl.: G06F 9/50

(54) **MEMORY POOL OPERATION METHOD AND APPARATUS**

(30) Priority: 16.06.2022 CN 202210686944; 30.09.2022 CN 202211214158
(71) Applicant: Huawei Cloud Computing Technologies Co., Ltd., Guiyang, Guizhou 550025 (CN)
(72) Inventor: ZUO, Pengfei, Guiyang, Guizhou 550025 (CN)
(74) Representative: Isarpatent
(86) International application number: PCT/CN2023/100596
(87) International publication number: WO 2023/241676

(57) **Abstract**

Embodiments of this application disclose a memory pool operation method, to improve data transmission performance of a memory pool. The method in embodiments of this application includes: A client provides a first interface, where the first interface includes one or more application programming interfaces APIs corresponding to algorithmic logic, and the algorithmic logic is used to convert an operation request sent by an application server into an operation on a memory pool. The client calls the first interface to generate a first operation request, and sends the first operation request to the memory pool, to perform one or more of the following operations on the memory pool based on the first operation request: a remote direct memory access RDMA operation, a memory allocation or release operation, and an offloading operation.

## Description

This application claims priority to Chinese Patent Application No. 202210686944.3, filed with the China National Intellectual Property Administration on June 16, 2022 and entitled "MEMORY CACHE SERVICE SYSTEM", which is incorporated herein by reference in its entirety.

This application claims priority to Chinese Patent Application No. 202211214158.X, filed with the China National Intellectual Property Administration on September 30, 2022 and entitled "MEMORY POOL OPERATION METHOD AND APPARATUS", which is incorporated herein by reference in its entirety.

### TECHNICAL FIELD

Embodiments of this application relate to the field of cloud storage, and in particular, to a memory pool operation method and apparatus.

### BACKGROUND

With the development of cloud service technologies, data of various applications run on a cloud server is stored in a back-end database, and the cloud server running the various applications is also referred to as an application server. Since data in the database is stored in disks, data transmission performance of the database cannot meet requirements of front-end applications. To improve data transmission performance, an application provider may purchase an in-memory storage service provided by a cloud vendor, that is, an application server stores, in a memory pool, data in a database, to improve data transmission performance.

In a current system architecture of an in-memory storage service, the in-memory storage service is provided by a memory pool including a plurality of servers, and each server in the memory pool includes a central processing unit (CPU) and a memory. In a process in which the memory pool provides the in-memory storage service, after a cloud server in the memory pool receives a data transmission request that is sent by an application server by using a remote procedure call (remote procedure call, RPC), a CPU of a corresponding server in the memory pool processes the data transmission request. A process of processing the data transmission request includes receiving, unpacking, processing, packing, and sending data.

Currently, a CPU of a cloud server in a memory pool needs to queue to process a plurality of data transmission requests from an application server. Consequently, data transmission performance between the application server and the memory pool is poor. In addition, CPU costs of the server in the memory pool account for a high proportion, resulting in high costs of an in-memory storage service currently.

### SUMMARY

Embodiments of this application provide a memory pool operation method and apparatus, to improve data transmission performance of a memory pool.

A first aspect of embodiments of this application provides a memory pool operation method, applied to a distributed in-memory storage system, where the distributed in-memory storage system includes a client and a memory pool, the client is deployed on an application server, and the application server is separated from the memory pool. The memory pool operation method provided in the first aspect includes: A client calls a first interface to generate a first operation request, where the first interface includes one or more application programming interfaces APIs corresponding to algorithmic logic, and the algorithmic logic is used to convert an operation request sent by an application server into an operation on a memory pool. The client sends the first operation request to the memory pool, to perform one or more of the following operations on the memory pool based on the first operation request: a remote direct memory access RDMA operation, a memory allocation or release operation, and an offloading operation.

In embodiments of this application, the client of the in-memory storage system is deployed separately from the memory pool, and the client can implement the remote direct memory access RDMA operation on the memory pool by calling the first interface corresponding to the algorithmic logic, to reduce data access latency of the application server in the memory pool, and improve data transmission performance between the application server and the memory pool. In addition, a central processing unit does not need to be added to the memory pool to process data, to reduce costs of the memory pool.

In a possible implementation, the algorithmic logic includes one or more pieces of algorithmic logic: data structure algorithmic logic, cache replacement algorithmic logic, multi-copy algorithmic logic, erasure code algorithmic logic, transaction algorithmic logic, and the like. The data structure algorithmic logic includes operation logic such as querying, inserting, updating, deleting, scanning, and modifying a data structure and data stored in the data structure. The data structure includes a hash table, a tree structure, a linked list, an ordered set, a skip list, and the like. The cache replacement algorithmic logic includes least recently used LRU algorithmic logic, least frequently used LFU algorithmic logic, and first in first out algorithmic logic. The multi-copy algorithmic logic includes eventual consistency algorithmic logic and serializable consistency algorithmic logic.

In embodiments of this application, the client can call a plurality of first interfaces to implement a plurality of different types of algorithmic logic, to generate a plurality of first operation requests. This improves implementability of generating the first operation request. In addition, based on an architecture in which the client is separated from the memory pool, a plurality of types of algorithmic logic are implemented on an application server side, without a need to add a central processing unit with strong computing power to the memory pool. This reduces costs of the memory pool.

In a possible implementation, before the client calls the first interface to generate the first operation request, the client receives, through a second interface, a second operation request sent by an application program in the application server, where the second operation request indicates the distributed in-memory storage system to perform one or more of the following operations: a query operation, an insertion operation, a deletion operation, a scanning operation, and an update operation. In a process in which the client calls the first interface to generate the first operation request, the client calls, based on the second operation request, the first interface to generate the first operation request.

In embodiments of this application, the application program in the application server sends the second operation request through the second interface, and calls, based on the second operation request, the corresponding first interface to generate the first operation request, to implement an RDMA operation, a memory allocation or release operation, and a computing task offloading operation on the memory pool. This improves data transmission performance between the application server and the memory pool, and reduces costs of an in-memory storage service.

In a possible implementation, the second interface includes one or more of the following interfaces: a remote dictionary server Redis application programming interface API, a Memcached API, and a key-value-store API.

In embodiments of this application, a distributed in-memory storage service may be implemented through a plurality of second interfaces. This improves implementability of the in-memory storage service.

In a possible implementation, the first operation request is a memory pool access request, and the client performs a remote direct memory access RDMA operation on the memory pool based on the memory pool access request.

In embodiments of this application, the client on the application server side reads and writes data in the memory pool by performing the RDMA operation, to reduce data transmission latency between the application server and the memory pool, and improve data transmission performance of the in-memory storage service.

In a possible implementation, the first operation request is a memory allocation or release request, and the distributed in-memory storage system performs a memory allocation or release operation on the memory pool based on the memory allocation or release request.

In embodiments of this application, the client on the application server side allocates or releases a memory address of the memory pool in real time on demand by using a memory allocation or release operation request. This improves flexibility of using a memory resource in the memory pool.

In a possible implementation, the memory pool includes a data processing unit DPU. The first request is an offloading operation request. The distributed in-memory storage system performs an offloading operation based on the offloading operation request, where the offloading operation is used to offload a computing task of the application server to the DPU in the memory pool for execution.

In embodiments of this application, the application server may offload the computing task to the data processing unit in the memory for execution, to improve efficiency of processing the computing task by the application server.

In a possible implementation, a distributed memory cache system provides a subscription interface of an in-memory storage service, where the subscription interface includes an on-demand billing mode, and the on-demand billing mode includes time-based billing and space-based billing.

In embodiments of this application, the in-memory storage service is sold in a serverless on-demand billing mode in which a user is unaware of a server, and the user can purchase the in-memory storage service on demand based on usage time and usage space. Compared with a manner in which the user purchases storage space in the memory pool in advance, this manner improves flexibility of the in-memory storage service

A second aspect of embodiments of this application provides a memory pool operation apparatus. The memory pool operation apparatus includes a transceiver unit and a processing unit. The processing unit is configured to call a first interface to generate a first operation request, where the first interface includes one or more application programming interfaces APIs corresponding to algorithmic logic, and the algorithmic logic is used to convert an operation request sent by an application server into an operation on a memory pool. The transceiver unit is configured to send the first operation request to the memory pool, to perform one or more of the following operations on the memory pool based on the first operation request: a remote direct memory access RDMA operation, a memory allocation or release operation, and an offloading operation.

In a possible implementation, the algorithmic logic includes one or more pieces of algorithmic logic: data structure algorithmic logic, cache replacement algorithmic logic, multi-copy algorithmic logic, erasure code algorithmic logic, transaction algorithmic logic, and the like.

In a possible implementation, the processing unit is further configured to receive, through a second interface, a second operation request sent by an application program in the application server, where the second operation request indicates a distributed in-memory storage system to perform one or more of the following operations: a query operation, an insertion operation, a deletion operation, and an update operation. The processing unit is specifically configured to call, based on the second operation request, the first interface to generate the first operation request.

In a possible implementation, the second interface includes one or more of the following interfaces: a remote dictionary server Redis application programming interface API, a Memcached API, and a key-value-store API.

In a possible implementation, the first operation request is a memory pool access request, and the processing unit is specifically configured to perform a remote direct memory access RDMA operation on the memory pool based on the memory pool access request.

In a possible implementation, the first operation request is a memory allocation or release request, and the processing unit is configured to perform a memory allocation or release operation on the memory pool based on the memory allocation or release request.

In a possible implementation, the memory pool includes a data processing unit DPU. The first request is an offloading operation request. The processing unit is specifically configured to perform an offloading operation based on the offloading operation request, where the offloading operation is used to offload a computing task of the application server to the DPU for execution.

In a possible implementation, the transceiver unit is specifically configured to provide a subscription interface of an in-memory storage service, where the subscription interface includes an on-demand billing mode, and the on-demand billing mode includes time-based billing and space-based billing.

A third aspect of embodiments of this application provides a computing device cluster, including at least one computing device. Each computing device includes a processor, and the processor of the at least one computing device is configured to execute instructions stored in a memory of the at least one computing device, to enable the computing device cluster to perform the method according to any one of the first aspect or the possible implementations of the first aspect.

A fourth aspect of embodiments of this application provides a computer-readable storage medium. The computer-readable storage medium stores instructions. When the instructions are executed, a computer is enabled to perform the method according to any one of the first aspect or the possible implementations of the first aspect.

A fifth aspect of embodiments of this application provides a computer program product. The computer program product includes instructions. When the instructions are executed, a computer is enabled to implement the method according to any one of the first aspect or the possible implementations of the first aspect.

It may be understood that, for beneficial effects that can be achieved by any computing device cluster, any computer-readable medium, any computer program product, or the like provided above, refer to beneficial effects in the corresponding method. Details are not described herein again.

### BRIEF DESCRIPTION OF DRAWINGS

FIG. 1 is a diagram of a system architecture of an in-memory storage service according to an embodiment of this application;
FIG. 2 is a schematic flowchart of a memory pool operation method according to an embodiment of this application;
FIG. 3 is a schematic flowchart of another memory pool operation method according to an embodiment of this application;
FIG. 4 is a schematic flowchart of one type of algorithmic logic according to an embodiment of this application;
FIG. 5 is a schematic flowchart of another type of algorithmic logic according to an embodiment of this application;
FIG. 6 is a schematic flowchart of another type of algorithmic logic according to an embodiment of this application;
FIG. 7 is a schematic flowchart of another type of algorithmic logic according to an embodiment of this application;
FIG. 8 is a schematic flowchart of another type of algorithmic logic according to an embodiment of this application;
FIG. 9 is a schematic flowchart of another memory pool operation method according to an embodiment of this application;
FIG. 10 is a diagram of a structure of a memory pool operation apparatus according to an embodiment of this application;
FIG. 11 is a diagram of a structure of a computing device according to an embodiment of this application; and
FIG. 12 is a diagram of a structure of a computing device cluster according to an embodiment of this application.

### DESCRIPTION OF EMBODIMENTS

Embodiments of this application provide a memory pool operation method and apparatus, to improve data transmission performance of a memory pool.

In the specification, the claims, and the accompanying drawings of this application, the terms "first", "second", "third", "fourth", and the like (if existent) are intended to distinguish between similar objects but do not necessarily indicate a specific order or sequence. It should be understood that data termed in such a way is interchangeable in appropriate circumstances so that embodiments of the present invention described herein can be implemented in other orders than the order illustrated or described herein. In addition, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

In embodiments of this application, the word "example" or "for example" is used to represent giving an example, an illustration, or a description. Any embodiment or design solution described as an "example" or "for example" in embodiments of this application should not be explained as being more preferred or advantageous than another embodiment or design solution. Exactly, use of the word "example", "for example", or the like is intended to present a related concept in a specific manner.

First, related terms in this application are explained and described, to facilitate understanding by a person skilled in the art.

A distributed memory cache (disaggregated memory cache, DMC) system is also referred to as a distributed in-memory storage system, and the DMC is a distributed cache, based on a memory pool, provided in this application.

Remote direct memory access (remote direct memory access, RDMA) is a direct memory access technology. The RDMA is to directly transfer data from a memory of a computing device to another computing device, without intervention of operating systems of the two computing devices.

The following describes a memory pool operation method and apparatus provided in embodiments of this application with reference to the accompanying drawings.

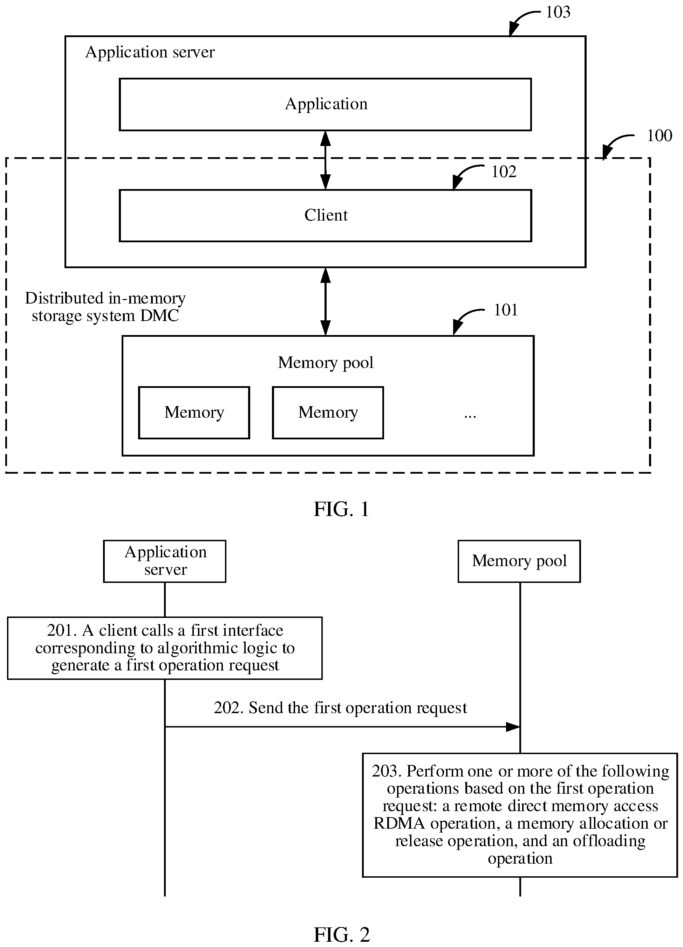

FIG. 1 is a diagram of a system architecture of a distributed in-memory storage system according to an embodiment of this application. In the system architecture shown in FIG. 1, the distributed in-memory storage system 100 includes a memory pool 101 and a client 102. The client 102 is deployed on an application server 103, and the application server 103 and the memory pool 101 are connected through a transmission network. The following specifically describes functions of each part of the distributed in-memory storage system 100.

The memory pool 101 is configured to provide an in-memory storage service for the application server 103. The memory pool 101 includes one or more memories 1011, and the memory 1011 is configured to store data or a data structure related to the in-memory storage service. The memory pool 101 may further include a network interface card and a data processing unit DPU. The data processing unit DPU is configured to execute a computing task offloaded by the application server 103 to the memory pool. The memory pool 101 provides standard interfaces, that is, third interfaces, for a remote direct memory access RDMA operation, a memory allocation or release operation, and an offloading operation for the application server.

The client 102 is configured to provide a cache access interface, that is, a second interface, for an application program. The cache access interface is, for example, a Redis API, a Memcached API, or a key-value-store API. The application program includes a web application run on the application server 103, for example, a game application, an e-commerce application, or a financial application.

The client 102 is further configured to implement a plurality of types of algorithmic logic, where the algorithmic logic includes data structure algorithmic logic, cache replacement algorithmic logic, multi-copy algorithmic logic, erasure code algorithmic logic, and transaction algorithmic logic. Each type of algorithmic logic has a corresponding calling interface, that is, a first interface. The client 102 generates various operation requests for the memory pool 101 by calling the interfaces corresponding to the plurality of types of algorithmic logic in combination, that is, first operation requests, including an RDMA operation request, a memory allocation or release operation request, and an offloading operation request. Since the client 102 is deployed on the application server 103, the plurality of types of algorithmic logic are implemented on an application server side.

FIG. 2 shows a memory pool operation method according to an embodiment of this application. The memory pool operation method includes but is not limited to the following steps.

201. A client in an application server calls a first interface to generate a first operation request.

The client in the application server calls the first interface to generate the first operation request, where the first interface includes one or more application programming interfaces APIs corresponding to algorithmic logic, and the algorithmic logic is used to convert an operation request sent by the application server into an operation on the memory pool. The client calls the first interface to generate the first operation request, where the first interface includes one or more of the following interfaces: an interface corresponding to data structure algorithmic logic, an interface corresponding to cache replacement algorithmic logic, an interface corresponding to multi-copy algorithmic logic, an interface corresponding to erasure code algorithmic logic, and an interface corresponding to transaction algorithmic logic.

In a possible implementation, before the client in the application server calls the first interface to generate the first operation request, the client receives, through a second interface, a second operation request sent by an application program in the application server, where the second operation request is implemented by calling operations of one or more types of algorithmic logic in combination.

Specifically, the client calls, based on the second operation request, the second interface corresponding to a processing logic module, to generate a third operation request, and the client calls, based on the third operation request, the first interface corresponding to one or more algorithmic logic modules, to generate the first operation request. The first operation request includes one or more of the following operation requests: a remote direct memory access RDMA operation request, a memory allocation or release operation request, and an offloading operation request. The second operation request indicates a distributed in-memory storage system to perform one or more of the following operations: a query operation, an insertion operation, a deletion operation, a scanning operation, and an update operation. The third operation request includes an operation request corresponding to one or more types of algorithmic logic.

For example, when the third operation request calls the data structure algorithmic logic, the third operation request indicates the distributed in-memory storage system to perform one or more of the following operations on a data structure: a query operation, an insertion operation, a deletion operation, an update operation, a scanning operation, and a modification operation. For another example, when the third operation request calls the cache replacement algorithmic logic, the third operation request indicates the distributed in-memory storage system to perform a write operation on information such as a data structure, a timestamp, and a count related to the cache replacement algorithmic logic. For another example, when the third operation request calls the multi-copy algorithmic logic or the erasure code algorithmic logic, the third operation request indicates the distributed in-memory storage system to perform a multi-copy algorithmic logic or erasure code algorithmic logic operation. For another example, when the third operation request calls the transaction algorithmic logic, the third operation request indicates the distributed in-memory storage system to perform operations related to the transaction algorithmic logic, such as transaction creation, transaction submission, transaction reading, transaction writing, transaction memory allocation, and transaction memory release.

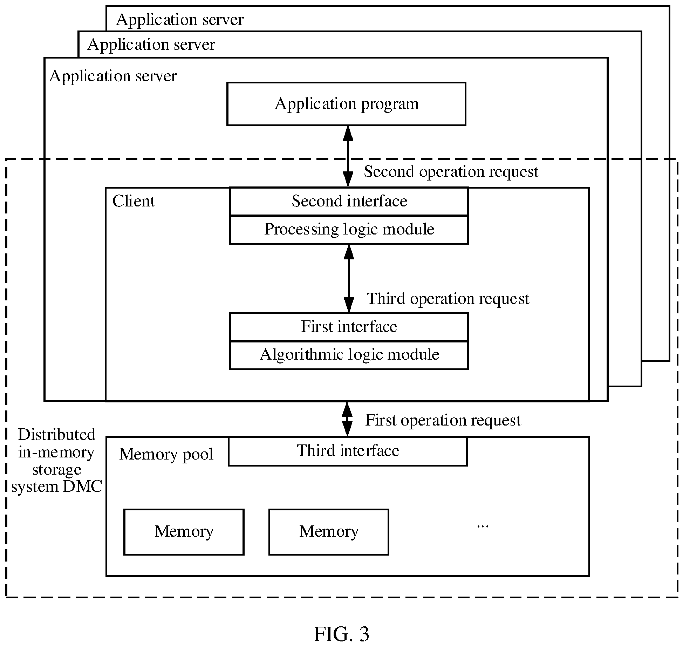

In this embodiment of this application, the second interface includes one or more of the following interfaces: a remote dictionary server Redis application programming interface API, a Memcached API, and a key-value-store API. FIG. 3 is a schematic flowchart of a memory pool operation method according to an embodiment of this application. In an example shown in FIG. 3, a client provides a second interface for an application program, and the client receives, through the second interface, a second operation request sent by the application program. Specifically, the client calls the second interface corresponding to a processing logic module to generate a third operation request, and calls, based on the third operation request, a first interface corresponding to one or more types of algorithmic logic to generate a first operation request. For example, the application program in the client sends the second operation request, where the second operation request indicates a query operation on a distributed in-memory storage system, and the client calls, based on the second operation request, the second interface corresponding to the processing logic module to generate the third operation request, where the third operation request indicates the client to perform a query operation and an insertion operation on a data structure. The client calls, based on the third operation request, the first interface corresponding to data structure algorithmic logic to generate the first operation request.

In this embodiment of this application, the algorithmic logic includes one or more pieces of the following algorithmic logic: data structure algorithmic logic, cache replacement algorithmic logic, multi-copy algorithmic logic, erasure code algorithmic logic, and transaction algorithmic logic. The following describes the foregoing types of algorithmic logic.

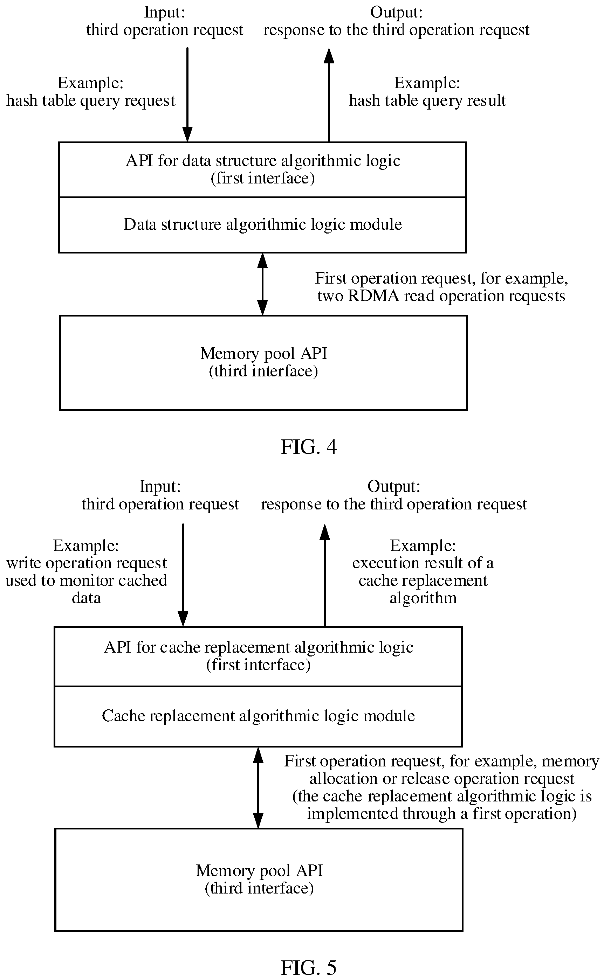

FIG. 4 is a diagram of data structure algorithmic logic according to an embodiment of this application. In an example shown in FIG. 4, a client calls, based on a third operation request, an interface corresponding to the data structure algorithmic logic to generate a first operation request. The data structure algorithmic logic is used to perform a third operation on a data structure and data stored in the data structure. The data structure is, for example, a hash table, a tree structure, a linked list, an ordered set, or a skip list. The third operation is an operation, for example, query, insertion, update, deletion, scanning, or modification. It may be understood that, for the insertion and update operations, the client needs to input data to be inserted and updated. For the query and scanning operations, the client needs to output query and scanning results.

In the example shown in FIG. 4, the client receives a second operation request sent by an application program in an application server, and the client calls, based on the second operation request, a second interface to generate the third operation request. For example, the third operation request is a hash table query request. The hash table query operation is implemented by using two RDMA read operations. A first RDMA read operation is reading a bucket in a hash table, and a second RDMA read operation is reading data to which a pointer in the bucket points. The client calls, based on the hash table query request, an interface corresponding to a data structure operation to generate the foregoing two RDMA read operation requests.

FIG. 5 is a diagram of cache replacement algorithmic logic according to an embodiment of this application. In an example shown in FIG. 5, a client calls an interface corresponding to the cache replacement algorithmic logic to generate a first operation request. The cache replacement algorithmic logic includes least recently used (least recently used, LRU) algorithmic logic, least frequently used (least frequently used, LFU) algorithmic logic, and first in first out (first in first out, FIFO) algorithmic logic.

In the example shown in FIG. 5, the client receives a second operation request sent by an application program in an application server, the client calls, based on the second operation request, a second interface to generate a third operation request, and the client calls, based on the third operation request, a first interface corresponding to the algorithmic logic to generate the first operation request. For example, the third operation request is a data structure write operation request related to the cache replacement algorithmic logic, and the client calls, based on the data structure write operation request, the interface corresponding to the cache replacement algorithmic logic to generate a memory allocation or release operation request. For another example, the third operation request is a timestamp or count write operation request related to the cache replacement algorithmic logic, and the client calls, based on the timestamp or count write operation request, the interface corresponding to the cache replacement algorithmic logic to generate an RDMA write operation request on a memory pool.

It should be noted that, in the example shown in FIG. 5, the first operation request may alternatively be an operation request for the application server, or may be an operation request for both the memory pool and the application server. For example, the client calls the interface corresponding to the cache replacement algorithm to generate a write operation request for the application server, where the write operation request is used to write, to the application server, data related to the cache replacement algorithm, such as a data structure, a timestamp, and a count. For another example, the client calls the interface corresponding to the cache replacement algorithmic logic to generate write operation requests for the application server and the memory pool respectively, where the write operation requests are used to write, to the application server and the memory pool respectively, data related to the cache replacement algorithm, such as a data structure, a timestamp, and a count.

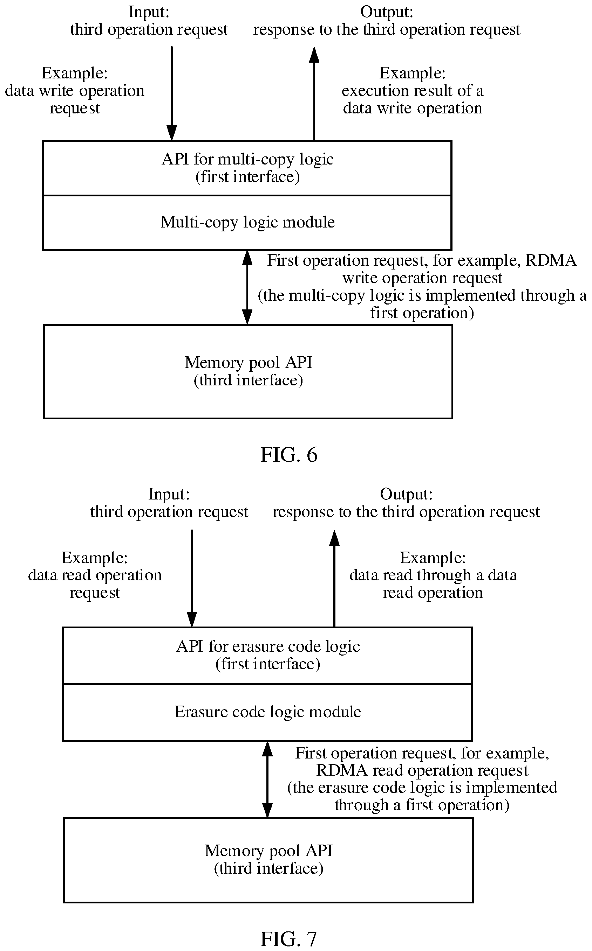

FIG. 6 is a diagram of multi-copy algorithmic logic according to an embodiment of this application. In an example shown in FIG. 6, a client calls an interface corresponding to the multi-copy algorithmic logic to generate a first operation request. The multi-copy algorithmic logic includes eventual consistency algorithmic logic and serializable consistency algorithmic logic.

In the example shown in FIG. 6, the client receives a second operation request sent by an application program in an application server, the client calls, based on the second operation request, a second interface to generate a third operation request, and the client calls, based on the third operation request, a first interface corresponding to the algorithmic logic to generate the first operation request. For example, when the third operation request is a read operation request, the client calls, based on the read operation request, the interface corresponding to the multi-copy algorithmic logic to generate an RDMA read operation request for a memory pool. For another example, when the third operation request is a write operation request, the client calls, based on the write operation request, the interface corresponding to the multi-copy algorithmic logic to generate an RDMA write operation request for the memory pool.

FIG. 7 is a diagram of erasure code algorithmic logic according to an embodiment of this application. In an example shown in FIG. 7, a client calls a first interface corresponding to the erasure code algorithmic logic to generate a first operation request.

In the example shown in FIG. 7, the client receives a second operation request sent by an application program in an application server, the client calls, based on the second operation request, a second interface to generate a third operation request, and the client calls, based on the third operation request, the first interface to generate the first operation request. For example, when the third operation request is a read operation request, the client calls, based on the read operation request, an interface corresponding to the erasure code algorithmic logicto generate an RDMA read operation request for a memory pool. For another example, when the third operation request is a write operation request, the client calls, based on the write operation request, the interface corresponding to the erasure code algorithmic logic to generate an RDMA write operation request for the memory pool.

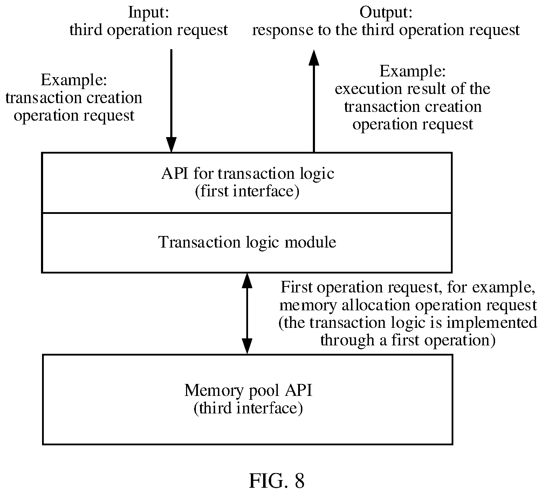

FIG. 8 is a diagram of transaction algorithmic logic according to an embodiment of this application. In an example shown in FIG. 8, a client calls an interface corresponding to the transaction algorithmic logic to generate a first operation request. The transaction algorithmic logic is used to implement operations such as transaction creation, transaction submission, transaction reading, transaction writing, transaction memory allocation, and transaction memory release.

In the example shown in FIG. 8, the client receives a second operation request sent by an application program in an application server, the client calls, based on the second operation request, a second interface to generate a third operation request, and the client calls, based on the third operation request, a first interface to generate the first operation request. For example, when the third operation request is a transaction creation operation request, the client calls, based on the transaction creation operation request, the interface corresponding to the transaction algorithmic
logic to generate a memory allocation operation request for a memory pool. For another example, when the third operation request is a transaction read operation request, the client calls, based on the transaction read operation request, the interface corresponding to the transaction algorithmic logic to generate an RDMA read operation request for the memory pool.

202. The application server sends the first operation request to the memory pool.

After the application server calls the first interface to generate the first operation request, the application server sends the third operation request to the memory pool. Specifically, the client in the application server sends the first operation request to the memory pool through a third interface, where the third interface includes an access interface of the memory pool.

Still refer to FIG. 3. In the example shown in FIG. 3, the client in the application server sends the first operation request to the memory pool through the third interface. For example, the client in the application server generates an RDMA read operation request for the memory pool, and the client sends the RDMA read operation request to the memory pool through the third interface, so that the client implements a read operation on data stored in the memory pool.

203. Perform one or more of the following operations on the memory pool based on the first operation request: a remote direct memory access RDMA operation, a memory allocation or release operation, and an offloading operation.

After a memory pool of a distributed memory cache system receives the first operation request through the third interface, one or more of the following operations are performed on the memory pool based on the first operation request: a remote direct memory access RDMA operation, a memory allocation or release operation, and an offloading operation. The RDMA operation includes an RDMA read operation, an RDMA write operation, and an RDMA compare and swap (compare and swap, CAS) operation.

Specifically, when the first operation request is a memory pool access request, the distributed in-memory storage system performs the remote direct memory access RDMA operation on the memory pool based on the memory pool access request. When the first operation request is a memory allocation or release request, the distributed in-memory storage system performs, on the memory pool based on the memory allocation or release request, an operation of allocating or releasing a memory in the memory pool. When the first operation request is an offloading operation request, the distributed in-memory storage system performs an offloading operation based on the offloading operation request, where the offloading operation is used to offload a computing task of the application server to a data processing unit DPU in the memory pool for execution.

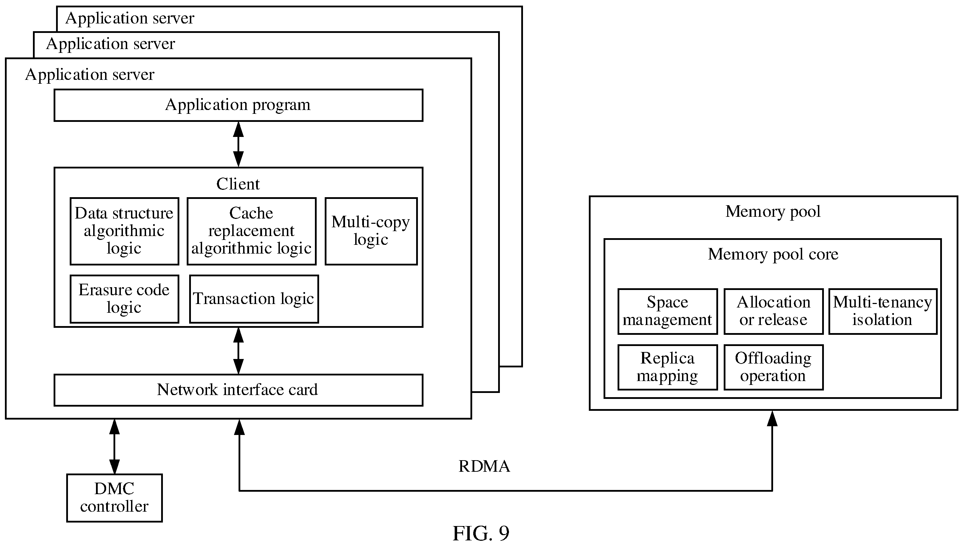

FIG. 9 is a diagram of another memory pool operation method according to an embodiment of this application. In an example shown in FIG. 9, one or more of the following functions can be implemented for a memory pool in a distributed in-memory storage system: memory pool space management, memory space allocation and release, replica mapping, multi-tenancy isolation, and offloading operation execution.

The memory pool space management is to address memory space of a plurality of processors in the memory pool into unified memory space, to provide an in-memory storage service for an application server. The replica mapping is to establish a replica mapping relationship between a plurality of storage addresses in a memory, to implement multi-copy algorithmic logic. The multi-tenancy isolation is to isolate memories of a plurality of application servers, so that access of different application servers to the memory pool is not affected by each other, to ensure quality of in-memory storage services of the application servers.

In embodiments of this application, the in-memory storage system is based on an architecture in which the client is deployed separately from the memory pool, and the client can implement the remote direct memory access RDMA operation on the memory pool by calling the first interface corresponding to the algorithmic logic, to reduce data access latency of the application server in the memory pool, and improve data transmission performance between the application server and the memory pool.

The memory pool operation method provided in embodiments of this application is described above. The following describes a memory pool operation apparatus provided in embodiments of this application with reference to the accompanying drawings.

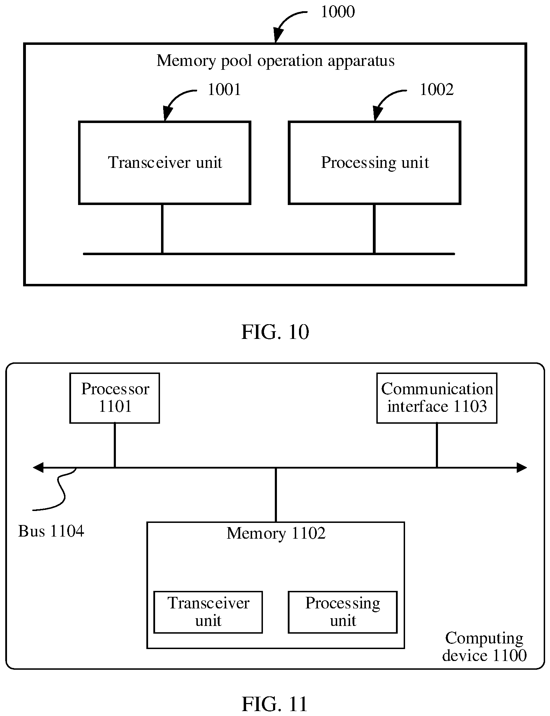

FIG. 10 is a diagram of a structure of a memory pool operation apparatus according to an embodiment of this application. The apparatus is configured to implement the steps performed by the distributed in-memory storage system in the foregoing embodiments. As shown in FIG. 10, the memory pool operation apparatus 1000 includes a transceiver unit 1001 and a processing unit 1002.

The processing unit 1002 is configured to call a first interface to generate a first operation request, where the first interface includes one or more application programming interfaces APIs corresponding to algorithmic logic, and the algorithmic logic is used to convert an operation request sent by an application server into an operation on a memory pool. The transceiver unit 1001 is further configured to send the first operation request to the memory pool, to perform one or more of the following operations on the memory pool based on the first operation request: a remote direct memory access RDMA operation, a memory allocation or release operation, and an offloading operation.

In a possible implementation, the algorithmic logic includes one or more pieces of algorithmic logic: data structure algorithmic logic, cache replacement algorithmic logic, multi-copy algorithmic logic, erasure code algorithmic logic, transaction algorithmic logic, and the like.

In a possible implementation, the processing unit 1002 is further configured to receive, through a second interface, a second operation request sent by an application program in the application server, where the second operation request indicates the distributed in-memory storage system to perform one or more of the following operations: a query operation, an insertion operation, a deletion operation, a scanning operation, and an update operation. The processing unit 1002 is specifically configured to call, based on the second operation request, the first interface to generate the first operation request.

In a possible implementation, the second interface includes one or more of the following interfaces: a remote dictionary server Redis application programming interface API, a Memcached API, and a key-value-store API.

In a possible implementation, the first operation request is a memory pool access request, and the processing unit 1002 is specifically configured to perform a remote direct memory access RDMA operation on the memory pool based on the memory pool access request.

In a possible implementation, the first operation request is a memory allocation or release request, and the processing unit 1002 is configured to perform a memory allocation or release operation on the memory pool based on the memory allocation or release request.

In a possible implementation, the memory pool includes a data processing unit DPU. The first request is an offloading operation request. The processing unit 1002 is specifically configured to perform an offloading operation based on the offloading operation request, where the offloading operation is used to offload a computing task of the application server to the DPU for execution.

In a possible implementation, the transceiver unit 1001 is specifically configured to provide a subscription interface of an in-memory storage service, where the subscription interface includes an on-demand billing mode, and the on-demand billing mode includes time-based billing and space-based billing.

It should be understood that division into units in the foregoing apparatus is merely logical function division. During actual implementation, all or some of the units may be integrated into one physical entity, or may be physically separated. In addition, all units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in a memory in a form of a program to be invoked by a processing element of the apparatus to perform a function of the unit. In addition, all or some of the units may be integrated, or may be implemented independently. The processing element herein may also be a processor, and may be an integrated circuit having a signal processing capability. During implementation, the steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that the present invention or this application is not limited by the described action sequence.

Another appropriate step combination that can be figured out by a person skilled in the art based on the foregoing described content also falls within the protection scope of the present invention or this application.

FIG. 11 is a diagram of a structure of a computing device according to an embodiment of this application. As shown in FIG. 11, the computing device 1100 includes a processor 1101, a memory 1102, a communication interface 1103, and a bus 1104. The processor 1101, the memory 1102, and the communication interface 1103 are coupled through the bus (not marked in the figure). The memory 1102 stores instructions. When executable instructions in the memory 1102 are executed, the computing device 1100 performs the method performed by the in-memory storage system in the foregoing method embodiments.

The computing device 1100 may be one or more integrated circuits configured to implement the foregoing method, for example, one or more application specific integrated circuits (application specific integrated circuits, ASICs), one or more digital signal processors (digital signal processors, DSPs), one or more field programmable gate arrays (field programmable gate arrays, FPGAs), or a combination of at least two of these integrated circuit forms. For another example, when units in the apparatus may be implemented in a form of a program invoked by the processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 1101 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory 1102 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1102 stores executable program code, and the processor 1101 executes the executable program code to separately implement functions of the foregoing transceiver unit and processing unit, so as to implement the foregoing memory pool operation method. In other words, the memory 1102 stores instructions used to perform the foregoing memory pool operation.

The communication interface 1103 is a transceiver apparatus, for example, but not limited to, a network interface card or a transceiver, to implement communication between the computing device 1100 and another device or a communication network.

The bus 1104 may include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, or the like.

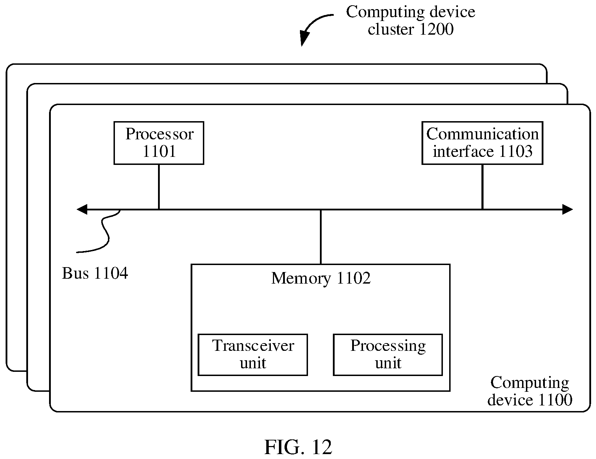

FIG. 12 is a diagram of a computing device cluster according to an embodiment of this application. As shown in FIG. 12, the computing device cluster 1200 includes at least one computing device 1100. The computing device 1100 may be a server, for example, a central server, an edge server, or a local server in a local data center. In some embodiments, the computing device 1100 may alternatively be a terminal device, for example, a desktop computer, a notebook computer, or a smartphone.

As shown in FIG. 12, the computing device cluster 1200 includes at least one computing device 1100. A memory 1102 in one or more computing devices 1100 in the computing device cluster 1200 may store same instructions used to perform the foregoing memory pool operation method.

In some possible implementations, the memory 1102 in the one or more computing devices 1100 in the computing device cluster 1200 may alternatively separately store some instructions used to perform the foregoing memory pool operation method. In other words, a combination of the one or more computing devices 1100 may jointly execute the instructions used to perform the foregoing memory pool operation method.

It should be noted that, memories 1102 in different computing devices 1100 in the computing device cluster 1200 may store different instructions that are respectively used to perform some functions of the foregoing memory pool operation apparatus. In other words, the instructions stored in the memories 1102 in different computing devices 1100 may be used to implement functions of one or more modules in a transceiver unit and a processing unit.

In some possible implementations, the one or more computing devices 1100 in the computing device cluster 1200 may be connected through a network. The network may be a wide area network, a local area network, or the like.

In another embodiment of this application, a computer-readable storage medium is further provided. The computer-readable storage medium stores computer-executable instructions. When a processor of a device executes the computer-executable instructions, the device performs the method performed by the in-memory storage system in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the in-memory storage system in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A memory pool operation method, applied to a distributed in-memory storage system, wherein the distributed in-memory storage system comprises a client and a memory pool, the client is deployed on an application server, and the application server is separated from the memory pool; and the method comprises:
calling, by the client, a first interface to generate a first operation request, wherein the first interface comprises one or more application programming interfaces APIs corresponding to algorithmic logic, and the algorithmic logic is used to convert an operation request sent by the application server into an operation on the memory pool; and
sending, by the client, the first operation request to the memory pool, to perform one or more of the following operations on the memory pool based on the first operation request: a remote direct memory access RDMA operation, a memory allocation or release operation, and an offloading operation.

2. The method according to claim 1, wherein the algorithmic logic comprises one or more pieces of algorithmic logic: data structure algorithmic logic, cache replacement algorithmic logic, multi-copy algorithmic logic, erasure code algorithmic logic, and transaction algorithmic logic.

3. The method according to claim 1 or 2, wherein before the calling, by the client, a first interface to generate a first operation request, the method further comprises:
receiving, by the client through a second interface, a second operation request sent by an application program in the application server, wherein the second operation request indicates the distributed in-memory storage system to perform one or more of the following operations: a query operation, an insertion operation, a deletion operation, a scanning operation, and an update operation; and
the calling, by the client, a first interface to generate a first operation request comprises:
calling, by the client, based on the second operation request, the first interface to generate the first operation request.

4. The method according to claim 3, wherein the second interface comprises one or more of the following interfaces: a remote dictionary server Redis application programming interface API, a Memcached API, and a key-value-store API.

5. The method according to any one of claims 1 to 4, wherein the first operation request is a memory pool access request, and the method further comprises:
performing, by the memory pool, a remote direct memory access RDMA operation on the memory pool based on the memory pool access request.

6. The method according to any one of claims 1 to 5, wherein the first operation request is a memory allocation or release request, and the method further comprises:
performing, by the memory pool, a memory allocation or release operation on the memory pool based on the memory allocation or release request.

7. The method according to any one of claims 1 to 6, wherein the memory pool comprises a data processing unit DPU, the first request is an offloading operation request, and the method further comprises:
performing, by the memory pool, an offloading operation based on the offloading operation request, wherein the offloading operation is used to offload a computing task of the application server to the DPU for execution.

8. The method according to any one of claims 1 to 7, wherein the method further comprises:
providing, by a distributed memory cache system, a subscription interface of an in-memory storage service, wherein the subscription interface comprises an on-demand billing mode, and the on-demand billing mode comprises time-based billing and space-based billing.

9. A memory pool operation apparatus, comprising:
a processing unit, configured to call a first interface to generate a first operation request, wherein the first interface comprises one or more application programming interfaces APIs corresponding to algorithmic logic, and the algorithmic logic is used to convert an operation request sent by an application server into an operation on a memory pool; and
a transceiver unit, configured to send the first operation request to the memory pool, to perform one or more of the following operations on the memory pool based on the first operation request: a remote direct memory access RDMA operation, a memory allocation or release operation, and an offloading operation.

10. The apparatus according to claim 9, wherein the algorithmic logic comprises one or more pieces of algorithmic logic: data structure algorithmic logic, cache replacement algorithmic logic, multi-copy algorithmic logic, erasure code algorithmic logic, and transaction algorithmic logic.

11. The apparatus according to claim 9 or 10, wherein the processing unit is further configured to:
receive, through a second interface, a second operation request sent by an application program in the application server, wherein the second operation request indicates the distributed in-memory storage system to perform one or more of the following operations: a query operation, an insertion operation, a deletion operation, a scanning operation, and an update operation; and
the processing unit is specifically configured to call, based on the second operation request, the first interface to generate the first operation request.

12. The apparatus according to claim 11, wherein the second interface comprises one or more of the following interfaces: a remote dictionary server Redis application programming interface API, a Memcached API, and a key-value-store API.

13. The apparatus according to any one of claims 9 to 12, wherein the first operation request is a memory pool access request, and the processing unit is specifically configured to:
perform a remote direct memory access RDMA operation on the memory pool based on the memory pool access request.

14. The apparatus according to any one of claims 9 to 13, wherein the first operation request is a memory allocation or release request, and the processing unit is configured to:
perform a memory allocation or release operation on the memory pool based on the memory allocation or release request.

15. The apparatus according to any one of claims 9 to 16, wherein the memory pool comprises a data processing unit DPU, the first request is an offloading operation request, and the processing unit is specifically configured to:
perform an offloading operation based on the offloading operation request, wherein the offloading operation is used to offload a computing task of the application server to the DPU for execution.

16. The apparatus according to any one of claims 9 to 15, wherein the transceiver unit is specifically configured to:
provide a subscription interface of an in-memory storage service, wherein the subscription interface comprises an on-demand billing mode, and the on-demand billing mode comprises time-based billing and space-based billing.

17. A computing device cluster, comprising at least one computing device, wherein each computing device comprises a processor, and the processor of the at least one computing device is configured to execute instructions stored in a memory of the at least one computing device, to enable the computing device cluster to perform the method according to any one of claims 1 to 8.

18. A computer-readable storage medium, wherein the computer-readable storage medium stores instructions, and when the instructions are executed, a computer is enabled to perform the method according to any one of claims 1 to 8.

19. A computer program product, wherein the computer program product comprises instructions, and when the instructions are executed, a computer is enabled to implement the method according to any one of claims 1 to 8.
